Europäisches Patentamt

European Patent Office

Office européen des brevets

(19)

(11) Publication number: **0 129 067**
**B1**

(12) **EUROPEAN PATENT SPECIFICATION**

(45) Date of publication of patent specification: **07.09.88**

(51) Int. Cl.⁴: **B 60 J 5/04**

(21) Application number: **84105621.1**

(22) Date of filing: **17.05.84**

(54) **Construction of mudguard of movable fender portion in motor vehicle.**

(30) Priority: **19.05.83 JP 74912/83 u**

(43) Date of publication of application:
**27.12.84 Bulletin 84/52**

(45) Publication of the grant of the patent:
**07.09.88 Bulletin 88/36**

(84) Designated Contracting States:
**DE FR GB**

(56) References cited:
**GB-A- 902 405**
**US-A-3 095 600**
**US-A-3 275 370**

(73) Proprietor: **TOYOTA JIDOSHA KABUSHIKI KAISHA**
**1, Toyota-cho Toyota-shi**
**Aichi-ken 471 (JP)**

(72) Inventor: **Nomura, Kazuhiro c/o Toyota Jidosha K.K.**
**1, Toyota-cho**
**Toyota-shi Aichi-ken (JP)**

(74) Representative: **Tiedtke, Harro, Dipl.-Ing. et al**
**Patentanwaltsbüro Tiedtke-Bühling-Kinne-Grupe-Pellmann-Grams-Struif Bavariaring 4**
**Postfach 20 24 03**
**D-8000 München 2 (DE)**

Courier Press, Leamington Spa, England.

# Description

This invention relates to a motor vehicle with a movable fender portion and a wheel house said motor vehicle being provided therein with a side door hinge mechanism utilizing a quadrilateral articulated crank chain.

In most cases, the side door in a motor vehicle, e.g. passenger car has heretofore been installed in a manner to be rotatable about a hinge affixed to a vehicle body for opening or closing. In order to allow an occupant of the motor vehicle to open or close the side door for getting on or off the motor vehicle, a door opening angle corresponding to the total length of the side door is required. At this time, when a space at the side of the motor vehicle is small, there are many cases where it is difficult for the occupant to get on or off the vehicle because the side door cannot be opened sufficiently.

In contrast thereto, as has been seen for example in US—A—3 275 370 and US—A—3 095 600, there has been proposed a side door hinge mechanism utilizing a quadrilateral articulated crank chain.

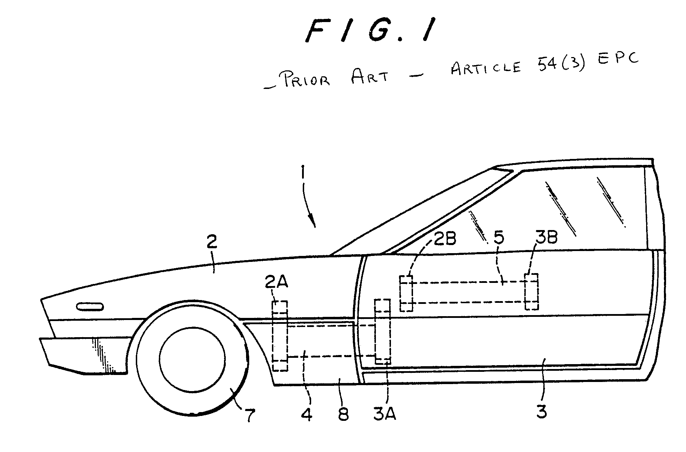

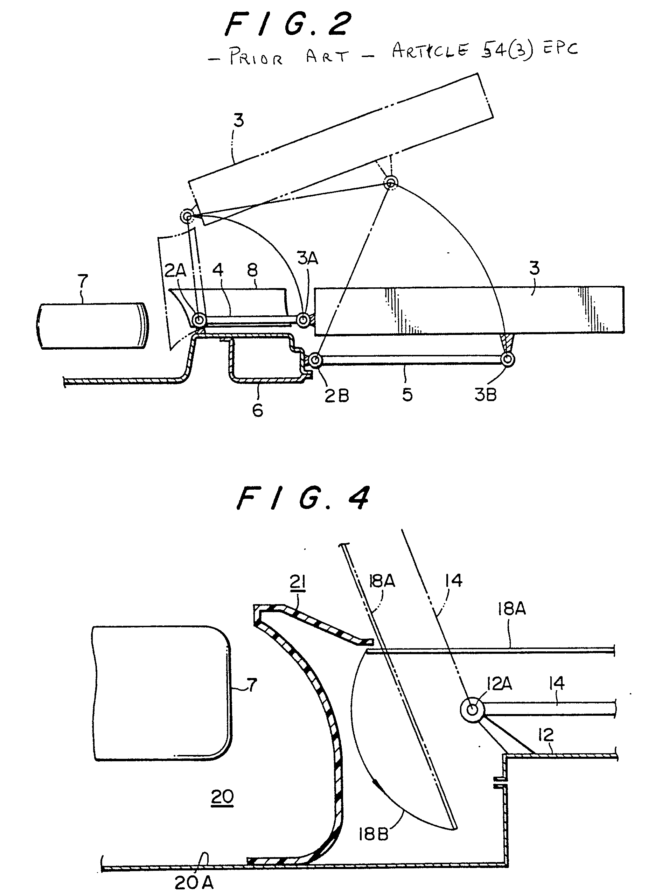

Furthermore, as proposed in EP—A—0 126 438, which was first published on November 28th, 1984 and in EP—A—0 125 703, which was first published on November 21st, 1984 (both documents are considered as closest state of the art pursuant Article 54(3) of the EPC but they are not considered to evaluate the inventive step pursuant Article 56 of the EPC) as shown in Figs. 1 and 2, a quadrilateral articulated crank chain comprises a rotary link 4 interconnecting two points which are disposed at the forward sides of a vehicle body 2 and a side door 3 in a motor vehicle 1 as rotary shafts 2A and 3A out of four points including two points on the vehicle body 2 and spaced apart from each other in the longitudinal direction of the vehicle body 2 and two points disposed on the side door 3 and spaced apart from each other in the longitudinal direction of the side door 3; a rotary link 5 interconnecting two points disposed at the rear sides as rotary shafts 2B and 3B; a portion between the two points on the vehicle body 2; and a portion between the two points on the side door 3, whereby the side door hinge mechanism in the motor vehicle 1 is formed.

In the drawing, designated at 6 is a front pillar, 7 a front wheel 8 and a movable fender rotatable with the rotary link 4, respectively.

The side door hinge mechanism utilizing the above-described quadrilateral articulated crank chain can reduce an essential space at the side of the motor vehicle with a space at the feet of an occupant of the vehicle being secured. In consequence, even when the space at the side of the motor vehicle is small, the occupant can open or close the side door 3 to get on or off the vehicle, because the above-described arrangement enables a shifting of the bearing elements of the vehicle body receiving a rotary shaft of the side door.

Thereby in particular the getting on and off the vehicle is facilitated when motor vehicles are placed close to each other or in similarly confined conditions. On the outer side of the lower rotary link the portion of the fender arranged between the same and the front wheel is so fixedly mounted that it forms a portion of the closed vehicle body when the side door is closed.

Due to the fact that the leading edge of the movable fender shifts around the rotary shaft on the vehicle body in the direction of the interior of the vehicle when the side door is opened and sufficient room must be provided for this rotating motion in order not to damage the vehicle body when the side door is opened and closed, the space between the front wheel, the leading edge of the movable fender and the bearing elements receiving the fixed rotary shaft on the vehicle body is free when the side door is closed, so that when the motor vehicle is driven, especially when the road is wet, particles of dirt whirled up by the front wheel dirty the bearing elements and have a long-term effect on the functioning of the bearings.

The subject matter of the invention is based upon the object to develop the above-described arrangement in the case of the motor vehicle with a movable fender portion and a wheel house such, that a dirtying of bearing elements is reliably excluded and yet the rotating motion of the movable fender remains possible.

This problem is solved by the entirety of the features of the main claim. The mudguard which is according to the invention separated of the movable fender, reliably protects the bearing elements arranged in longitudinal direction of the vehicle behind it and also the backside of the movable fender from becoming dirty.

Advantageous modifications of the invention derive from the subclaims.

Description will hereunder be given of an embodiment of the present invention with reference to the accompanying drawings, in which

Fig. 1 is a side view showing a motor vehicle provided with a quadrilateral articulated crank chain type side door hinge mechanism, to which the present invention is to be applied;

Fig. 2 is a schematic sectional plan view showing the action of the side door hinge mechanism in the above motor vehicle;

Fig. 3 is a perspective view showing an embodiment of the mudguard of the movable fender portion in the motor vehicle according to the present invention; and

Fig. 4 is an enlarged sectional view taken along the line IV—IV in Fig. 3.

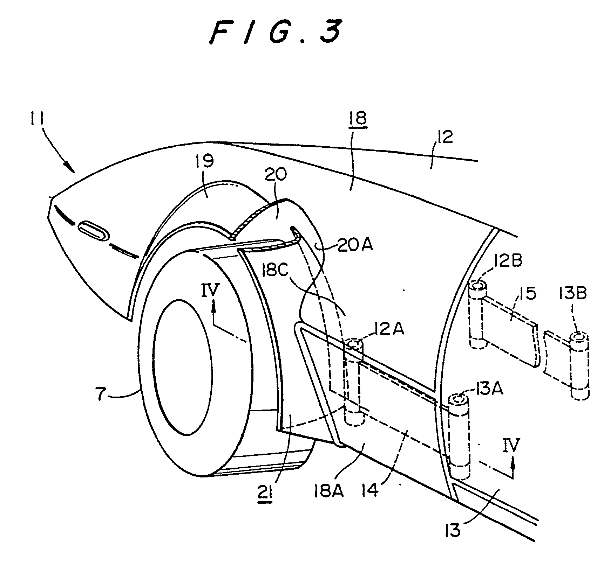

Figs. 3 and 4 show, according to this embodiment, a construction of a mudguard of a movable fender portion in a motor vehicle 11 provided therein with a side door hinge mechanism utilizing a quadrilateral articulated crank chain comprising: a front rotary link 14 interconnecting two points which are disposed at the front side of a vehicle body 12 and a side door 13 in the motor vehicle 11 as first rotary shafts 12A and 13A out of four points including two points disposed on the vehicle body 12 and spaced apart from each other in the longitudinal direction of the vehicle body 12 and two points disposed on the side door 13 and spaced apart from each other in the longitudinal direction of the side door 13; a rear rotary link 15 interconnecting two points disposed at the rear sides of the vehicle body 12 and the side door 13 out of the four points as round rotary shafts 12B and 13B; a portion between the two points on the vehicle body 12; and a portion between the two points on the side door 13, wherein a portion of a front fender 18 covering the outer surface of at least a part of the front rotary link 14 is formed into a movable fender 18A rotatable integrally with the rotary shaft 12A of the front rotary link 14 as centered thereabout, a portion of a wheel arch flare 19 positioned at least forwardly of the movable fender 18A is extended in to a wheel house 20 at a position forwardly of a moving path 8 of the movable fender 18A, and the forward end of the extended wheel arch flare 19 is connected to an inner wall 20A of the wheel house 20, whereby a mudguard 21 made of synthetic resin and partitioning the front wheel 7 from the movable fender 18A is formed.

More specifically, an end portion of the inner periphery of the wheel arch flare 19 is disposed at a position close to the outer periphery of the front wheel 7 in general, this wheel arch flare 19 is extended to the inner wall 20A of the wheel house 20 at a position between the front wheel 7 and the movable fender 18A in a manner not to interfere with the moving path 18B, along which the movable fender 18A moves during the opening of the side door 13 as shown in Fig. 4, whereby the wheel arch flare 19 is secured to the inner wall 20A in this wheel house 20.

The rear end portion of the outer surface of said wheel arch flare 19 is extended in a manner to cover the outer surface of the forward end portion of said movable fender 18A when the side door 13 is closed.

Said movable fender 18A comprises a portion of said fender 18, said portion being disposed rearwardly of the front wheel 7 and generally being lower than said front rotary link 14.

In consequence, in this embodiment, the muddy water and the like splashed up by the front wheel 7 are obstructed by the mudguard 21, and prevented from reaching the inner surface of the movable fender 18A, the rotary shaft 12A, the rotary link 14 or a front pillar 6 portion.

In this embodiment, the mudguard 21 is made of synthetic resin. However, the mudguard 21 may be made of any of other material such as metal.

Furthermore, in the above embodiment, the mudguard 21 is formed separately of a portion other than the movable fender 18A of the fender 18, i.e. an upper fender 18C. However, the present invention need not necessarily be limited to this, and, the mudguard 21 may be formed integrally with the upper fender 18C.

In the above case, the installation of the mudguard is facilitated.

## Claims

1. Motor vehicle (11) with a movable fender portion and a wheel house (20) said motor vehicle (11) being provided therein with a side door hinge mechanism utilizing a quadrilateral articulated crank chain comprising: a front rotary link (14) interconnecting two points which are disposed at the front side of a vehicle body (12) and a side door (13) in said motor vehicle as first rotary shafts (12A, 13A), a rear rotary link (15) interconnecting two points disposed at the rear sides of said vehicle body (12) and said side door (13) as second rotary shafts (12B, 13B) which are spaced in the longitudinal direction of said vehicle body (12) respectively said side door (13) from said first rotary shafts (12A, 13A), wherein a portion of a front fender (18) covering the outer surface of at least a part of said front rotary link (14) is formed into a movable fender (18A) rotatable integrally with said rotary shaft (12A) of said front rotary link (14) as centred thereabout, a front end of said movable fender (18A) projects forwardly above said rotary shaft (12A) of said front rotary link (14) said wheel house (20) is provided with a wheel arch flare (19) positioned at least forwardly of said movable fender (18A) and extending into said wheel house (20) at a position forwardly of a moving path (18B) of said movable fender (18A), and the forward end of said extended wheel arch flare (19) is connected to an inner wall (20A) of said wheel house (20) whereby a mudguard (21) partitioning a front wheel (7) from said movable fender (18A) is formed.

2. Motor vehicle (11) with a movable fender portion and a wheel house (20) according to claim 1, wherein said mudguard (21) is integrally formed on an upper fender (18C) as being a portion other than said movable fender (18A) of said fender (18).

3. Motor vehicle (11) with a movable fender portion and a wheel house (20) according to claim 1, wherein said mudguard (21) is formed separately of an upper fender (18C) as being a portion other than said movable fender (18A) of said front fender (18).

4. Motor vehicle (11) with a movable fender position and a wheel house (20) according to claim 1, 2 or 3, wherein the rear end portion of the outer surface of said wheel arch flare (19) is extended in a manner to cover the outer surface of the forward end portion of said movable fender (18A) when said side door (13) is closed.

5. Motor vehicle (11) with a movable fender portion and a wheel house (20) according to claim 1, 2, 3 or 4 wherein said movable fender (18A) comprises a portion of said front fender (18), which portion is disposed rearwardly of said front wheel (7) and generally lower than said front rotary link (14).

## Patentansprüche

1. Kraftfahrzeug (11) mit einem beweglichen Kotflügelteil und einem Radkasten (20), wobei das Kraftfahrzeug (11) mit einem Seitentür-Gelenkmechanismus, der eine vierseltig angelenkte Kurbelkette verwendet, versehen ist, enthaltend: ein vorderes drehendes Gelenk (14), das zwei Stellen, die an der vorderen Seite einer Kraftfahrzeugkarosserie (12) und an einer Seitentür (13) im Kraftfahrzeug als erste Drehwellen (12A, 13A) angeordnet sind, verbindet, ein hinteres drehendes Gelenk (15), das zwei Stellen, die an den rückwärtigen Seiten der Fahrzeugkarosserie (12) und der Seitentür (13) als zweite Drehwellen (12B, 13B) angeordnet und in der Längsrichtung der Fahrzeugkarosserie (12) beziehungsweise der Seitentür (13) von den ersten Drehwellen (12A, 13A) beabstandet sind, verbindet, wobei ein Teil eines vorderen Schutzblechs (18), der die Außenfläche von wenigstens einem Teil des vorderen drehenden Gelenks (14) überdeckt, als ein einstükkig mit der Drehwelle (12A) des vorderen drehenden Gelenks (14) sowie um diese als Zentrum dreh- und bewegbarer Kotflügel (18A) ausgebildet ist, von dem ein vorderes Endstück vorwärts über die Drehwelle (12A) des vorderen drehenden Gelenks (14) vorsteht, wobei der Radkasten (20) mit einer wenigstens vorwärts vom bewegbaren Kotflügel (18A) angeordneten sowie sich in den Radkasten (20) an einer vorwärts einer Bewegungsbahn (18B) des bewegbaren Kotflügels (18A) gelegenen Stelle erstreckenden Radkastenauswölbung (19) versehen ist und das vordere Ende der erstreckten Radkastenauswölbung (19) mit einer Innenwand (20A) des Radkastens (20) verbunden ist, so daß ein ein Verderrad (7) vom bewegbaren Kotflügel (18A) trennender Schmutzfänger (21) gebildet wird.

2. Kraftfahrzeug (11) mit einem beweglichen Kotflügelteil und einem Radkasten (20) nach Anspruch 1, dadurch gekennzeichnet, daß der Schmutzfänger (21) einstückig an einem oberen Kotflügel (18C), der ein zum bewegbaren Kotflügel (18A) des Schutzblechs (18) verschiedenes Teil ist, ausgebildet ist.

3. Kraftfahrzeug (11) mit einem beweglichen Kotflügelteil und einem Radkasten (20) nach Anspruch 1, dadurch gekennzeichnet, daß der Schmutzfänger (21) getrennt von einem oberen Kotflügel (18C), der ein zum bewegbaren Kotflügel (18A) verschiedenes Teil ist, ausgebildet ist.

4. Kraftfahrzeug (11) mit einem beweglichen Kotflügelteil und einem Radkasten (20) nach Anspruch 1, 2 oder 3, dadurch gekennzeichnet, daß das rückwärtige Endstück der Außenfläche der Radkastenauswölbang (19) in einer Weise erstreckt ist, daß die Anßentlacke des vorderen Endabschnitts des bewegbaren Kotflügels (18A) im Schließzustand der Seitentür (13) überdeckt ist.

5. Kraftfahrzeug (11) mit einem beweglichen Kotflügelteil und einem Radkasten (20) nach Anspruch 1, 2, 3 oder 4, dadurch gekennzeichnet, daß der bewegbare Kotflügel (18A) ein Teil des vorderen Schutzblechs (18), welches rückwärts vom Vorderrad (7) und im allgemeinem tiefer als das vordere drehende Gelenk (14) angeordnet ist, umfaßt.

## Revendications

1. Véhicule automobile (11) comportant une partie d'aile mobile et un passage de roue (20), ledit véhicule automobile (11) étant muni d'un mécanisme de charnière de porte latérale utilisant une chaîne (cinématique) de pivotement articulée en quadrilatère comprenant: une biellette rotative avant (14) reliant deux points qui sont disposés sur le côté avant d'une caisse de véhicule (12) à une porte latérale (13) dudit véhicule automobile et constituant des premiers arbres de rotation (12A, 13A), une beliette rotative arrière (15) reliant deux points disposés sur les faces arrières de ladite caisse de véhicule (12) à la ladite porte latérale (13) et constituant des seconds arbres de rotation (12B, 13B) qui sont espacés desdits premiers arbres de rotation (12A, 13A) dans la direction longitudinale respectivement de ladite caisse de véhicule (12) et de ladite porte latérale (13), dans lequel une partie d'une aile avant (18) couvrant la surface extérieure d'au moins une partie de ladite biellette rotative avant (14) est formée par une aile (18A) mobile en rotation d'un seul tenant avec ledit arbre de rotation (12A) de ladite biellette rotative avant (14) en étant centrée sur celui-ci, une extrémité avant de ladite aile mobile (18A) faisant saillie en avant au dessus dudit arbre de rotation (12A) de ladite biellette rotative avant (14), ledit passage de roue (20) étant pourvu d'un évasement de l'entourage de roue (19) disposé au moins à l'avant de ladite aile mobile (18A) et se prolongeant dans ledit passage de roue (20) dans une zone située en avant de la trajectoire de déplacement (18B) de ladite aile mobile avant (18A) et l'extrémité avent dudit évasement de l'entourage de roue (19) étant reliée à une paroi interne (20A) dudit passage de roue (20), de manière à former un grade-boue (21) séparant une roue avant (7) de ladite aile mobile (18A).

2. Véhicule automobile (11) comportant une partie d'aile mobile et un passage de roue (20) selon la revendication 1, dans lequel ledit gardeboue (21) est formé monobloc sur une partie supérieure d'aile (18C) pour constituer une partie de ladite aile (18) qui est différente de ladite aile mobile (18A).

3. Véhicule automobile (11) comportant une partie d'aile mobile et un passage de roue (20) selon la revendication 1, dans lequel ledit gardeboue (21) est formé séparément sur une aile supérieure (18C) pour constituer une partie de ladite aile (18) qui est différente de ladite aile mobile (18A).

4. Véhicule automobile (11) comportant une partie d'aile mobile et un passage de roue (20) selon la revendication 1, 2 ou 3, dans lequel la partie d'extrémité arrière de la surface extérieure dudit évasement (19) de l'entourage de roue s'étend de manière à couvrir la surface extérieure de la partie d'extrémité avant de ladite aile mobile (18A) quand ladite porte latérale (13) est fermée.

5. Véhicule automobile (11) comportant une partie d'aile mobile et un passage de roue (20) selon la revendication 1, 2, 3 ou 4, dans lequel ladite aile mobile (18A) comporte une partie de ladite aile avant (18), disposée en arrière de ladite roue avant (7) et d'une façon générale plus bas que ladite biellette rotative avant (14).

0 129 067

# F I G . 1

_PRIOR ART - ARTICLE 54(3) EPC

0 129 067

# FIG.2

- PRIOR ART - ARTICLE 54(3) EPC

# FIG.4

2

0 129 067

# F I G . 3